# EUROPÄISCHE PATENTSCHRIFT

(11) **EP 1 835 436 B1**
(45) Veröffentlichungstag und Bekanntmachung des Hinweises auf die Patenterteilung: **16.07.2014**
(21) Anmeldenummer: 07100685.2
(22) Anmeldetag: 17.01.2007
(51) Int. Cl.: G06K 7/00, G06K 19/07

(54) **Transponderlesevorrichtung**
Transponder reading device
Dispositif de lecture de transpondeur

(30) Priorität: 16.03.2006 DE 102006011980
(43) Veröffentlichungstag der Anmeldung: 19.09.2007
(73) Patentinhaber: TeraTron GmbH, 51647 Gummersbach (DE)
(72) Erfinder: Petsching, Wilfried, 51702 Bergneustadt (DE); Döhl, Andreas, 51647 Gummersbach (DE); Schmale, Ralf, 42499 Hückeswagen (DE)
(74) Vertreter: Cohausz & Florack

(56) Entgegenhaltungen:
- WO-A-00/77717
- US-A1- 2005 231 331

## Beschreibung

Die Anmeldung betrifft eine Transponderlesevorrichtung mit einer Steuereinrichtung zum Steuern einer elektromagnetische Wellen aussendenden und empfangenden Ausleseeinrichtung.

Heutzutage sind Zugangskontrollsysteme bekannt, die mit Hilfe von Transpondern gesteuert werden. Transponder sind im Allgemeinen mit einem integrierten Schaltkreis verbundene Hochfrequenzspulen. In einer solchen Hochfrequenzspule wird durch ein elektromagnetisches Wechselfeld eine Spannung induziert, mit welcher der integrierte Schaltkreis aktiviert wird. Daraufhin senden diese Transponder ebenfalls über elektromagnetische Wellen eine eindeutige Kennung aus. Durch die Verwendung von Transpondern ist es möglich, berührungslos eindeutige Kennungen abzufragen. Heutige Transponder tragen eine eindeutige Kennung, welche weltweit einmalig ist. Die eindeutige Kennung kann bei neuartigen Transpondern lediglich ausgelesen werden. Es ist nicht möglich, Transponder mit veränderten eindeutigen Kennungen zu versehen. Diese nur auslesbaren Transponder ermöglichen auch den Austausch der eindeutigen Kennung mit Hilfe von Kryptographieverfahren.

Transponder arbeiten in der Regel im Amplitude-Shift-Keying (ASK) Verfahren als auch im Frequency-Shift-Keying (FSK) Verfahren. Herkömmlicherweise werden Frequenzen von 125 kHz und 134 kHz verwendet. Das ASK Verfahren arbeitet regelmäßig bei 125 kHz und das FSK Verfahren bei 134 kHz.

Es hat sich jedoch gezeigt, dass die Verbreitung von Zugangskontrollsystemen mit Hilfe von Transpondern nur schleppend voranschreitet, da jeder Hersteller der Zugangskontrollsysteme proprietäre Protokolle für die Abfrage der Transponderkennungen unterstützt. Es ist regelmäßig notwendig, dass die für das Zugangskontrollsystem verwendeten Transponder das proprietäre Protokoll unterstützen. Daher haben Nutzer stets einen eigens für das Zugangskontrollsystem konzipierten Transponder mit sich zu tragen, um eine Freigabe des Zugangskontrollsystems zu ermöglichen. Dies führt zu Mehrkosten und zu erhöhtem Aufwand bei den Nutzern. Dokument WO 00/77717 A1 offenbart ein solches System.

Aus diesem Grunde war es eine Aufgabe, eine Transponderlesevorrichtung zur Verfügung zu stellen, welche verschiedenartige Transpondertypen unterstützt.

Die zuvor aus dem Stand der Technik hergeleitete und aufgezeigte Aufgabe wird gemäß Anspruchs 1 gelöst.

Es ist erkannt worden, dass durch die weite Verbreitung von Transpondern nahezu jede Person einen solchen besitzt. Die in dem Besitz der Benutzer vorhandenen Transponder kennzeichnen sich alle dadurch, dass diese eine eindeutige Kennung mit sich tragen. Diese Transponder unterscheiden sich jedoch in der jeweiligen Abfrage. Sie unterstützen verschiedenartige Protokolle zur Abfrage der eindeutigen Kennung. Die Erfindung macht sich die weite Verbreitung der Transponder zunutze, indem sie es ermöglicht, verschiedenartige Transponder an die Transponderlesevorrichtung anzulernen.

Heutzutage weist fast jeder Autoschlüssel einen Transponder auf, der für die Steuerung einer Wegfahrsperre genutzt wird. Die verschiedenen Fahrzeughersteller unterstützen jedoch unterschiedlichste Protokolle und fragen die Transponder auf unterschiedliche Arten und Weisen ab. Um die verschiedenartigen Autoschlüssel für die erfindungsgemäße Transponderlesevorrichtung nutzbar zu machen, schlägt die Erfindung vor, dass beim Programmieren verschiedenartige Aktivierungskommandos ausgesendet werden, um die verschiedenartigen Transponder zu aktivieren und deren eindeutige Kennung auszulesen. Hierdurch wird es ermöglicht, dass ein und dieselbe Transponderlesevorrichtung mit unterschiedlichen Typen von Transpondern angesteuert werden kann, nachdem diese an die Transponderlesevorrichtung angelernt wurden.

Ein Anlernen von verschiedenartigen Transpondern im Programmiermodus muss gewährleisten, dass die verschiedenartigen Transponder auch aktiviert werden. Aus diesem Grunde wird auch vorgeschlagen, dass in Intervallen zumindest zwei verschiedenartige Aktivierungskommandos ausgesendet werden. So wird vorgeschlagen, dass in einem ersten Intervall ein Aktivierungskommando nach dem Protokoll A, in einem zweiten Intervall ein Aktivierungskommando eines Protokolls B und in einem möglichen dritten Intervall ein Aktivierungskommando eines Protokolls C ausgesendet wird. Die Anzahl der verschiedenen unterstützten Protokolle ist variabel und kann mit Hilfe eines programmierbaren Flash-Speichers in die Transponderlesevorrichtung eingespeichert werden. Das Aussenden der verschiedenartigen Aktivierungskommandos kann zyklisch über einen gewissen Zeitraum erfolgen. Wird innerhalb dieses Zeitraumes ein Transponder in den Sende- und Empfangsbereich der Ausleseeinrichtung gehalten, wird dieser aktiviert, wenn das Aktivierungskommando mit dem Protokoll ausgesendet wird, welches der jeweilige Transponder unterstützt.

Um den einmal aktivierten Transponder an die Transponderlesevorrichtung anlernen zu können, wird ferner vorgeschlagen, dass in dem Programmiermodus die Steuereinrichtung die Ausleseeinrichtung derart ansteuert, dass die Ausleseeinrichtung nach dem Aussenden der Aktivierungskommandos eine einen Transpondertyp kennzeichnende Rückmeldung eines Transponders sensiert. Es ist auch möglich, dass eine Mehrzahl von Transpondern das gleiche Aktivierungskommando unterstützen, jedoch zum Auslesen ihrer eindeutigen Kennung wiederum verschiedene Protokolle unterstützen. Beispielsweise ist es möglich, dass Aktivierungskommandos auf 125 kHz bzw. 134 kHz im ASK Verfahren oder FSK Verfahren ausgesendet werden. Nachdem die Transponder aktiviert wurden, können diese eine Bezeichnung ihres Typs aussenden. Der ausgesendete Transpondertyp wird von der Ausleseeinrichtung sensiert.

Nachdem sensiert wurde, welcher Transpondertyp im Sende- und Empfangsbereich der Ausleseeinrichtung sich befindet, wird gemäß eines vorteilhaften Ausführungsbeispiels vorgeschlagen, dass die Ausleseeinrichtung nach dem Sensieren einer den Transpondertyp kennzeichnenden Rückmeldung abhängig vom sensierten Transpondertyp eine eindeutige Transponderkennung vom Transponder abfragt. Dadurch, dass zunächst der Transpondertyp abgefragt worden ist, kann die Transponderlesevorrichtung mit dem von dem jeweiligen Transponder unterstützten Protokoll die eindeutige Kennung des Transponders abfragen. Während dieser Abfrage kann die Transponderlesevorrichtung in dem von dem jeweiligen Transponder unterstützen Protokoll ein Abfragesignal an den Transponder über die elektromagnetischen Wellen senden. Der Transponder antwortet daraufhin, da er das Protokoll des Abfragesignal unterstützt, mit seiner eindeutigen Transponderkennung. Da die Transponderkennung eindeutig ist und nicht in andere Transponder eingelesen werden kann, insbesondere nicht bei Read-Only-Transpondern, die alle ein bestimmtes Protokoll unterstützen, muss die Kommunikation zwischen Transponderlesevorrichtung und Transponder nicht gesichert sein. Sollte die Kommunikation zwischen Transponderlesevorrichtung und Transponder abgehört werden, ist zwar die eindeutige Kennung des Transponders bekannt, jedoch kann diese nicht in einen anderen Transponder eingelesen werden.

Die Transponderkennung zusammen mit dem Transpondertyp sind in der Transponderlesevorrichtung bekannt, nachdem der Transpondertyp und die Transponderkennung abgefragt wurden. Dieses Tuppel von Daten wird in der Steuereinrichtung gespeichert. Mit Hilfe dieser gespeicherten Daten ist es möglich, den so angelernten Transponder in der Zukunft zu unterstützen.

Nachdem die Programmierung zumindest eines Transponders abgeschlossen ist, wird vorgeschlagen, dass die Ausleseeinrichtung in Intervallen abhängig von zumindest einem gespeicherten Transpondertyp eindeutige Transponderkennungen von Transpondern abfragt. Um die Abfragegeschwindigkeit zu beschleunigen, wird vorgeschlagen, nur die Transponder in Intervallen abzufragen, welche zuvor an die Transponderlesevorrichtung angelernt wurden. Dies kann dadurch geschehen, dass bei der Abfrage nur die Protokolle verwendet werden, welche zu den Transpondertypen passen, welche zuvor gespeichert wurden. Alle anderen Transpondertypen werden nach der Programmierung nicht mehr abgefragt. Dies führt zu einer beschleunigten Abfrage und Antwort. Die Steuereinrichtung prüft, welche Transpondertypen bereits angelernt wurden. Abhängig hiervon, werden verschiedenartige Abfrageroutinen mit Hilfe der Ausleseeinrichtung durchgeführt und über die elektromagnetischen Wellen verschiedenartige Transponder abgefragt. Nur die Transpondertypen, die tatsächlich abgefragt werden, können antworten.

Um zu überprüfen, ob die antwortenden Transponder tatsächlich an die Transponderlesevorrichtung angelernt wurden, wird gemäß eines Ausführungsbeispiels vorgeschlagen, dass die Steuereinrichtung die abgefragten Transponderkennungen mit den gespeicherten Transponderkennungen vergleicht und abhängig vom Vergleichsergebnis ein Freigabesignal erzeugt.

Um zu ermöglichen, dass nach einer ersten Programmierung weitere Transponder an die Transponderlesevorrichtung angelernt werden können, wird gemäß eines vorteilhaften Ausführungsbeispiels vorgeschlagen, dass die Steuereinrichtung nach ihrer Programmierung die Ausleseeinrichtung derart ansteuert, dass die Ausleseeinrichtung in Intervallen eine gespeicherte, eindeutige Transponderkennung eines Programmiertransponders abfragt. Neben der Abfrage von angelernten Transpondern ist es möglich, einen weiteren Typ von Transpondern in den Intervallen abzufragen. Hierbei ist es möglich, dass ein Programmiertransponder ein eigenes Protokoll unterstützt. Es ist möglich, zunächst abzufragen, ob der gespeicherte Transponder A im Sende- und Empfangsbereich der Ausleseeinrichtung ist, danach abzufragen, ob der gespeicherte Transponder B in Reichweite ist und anschließend, nachdem alle weiteren gespeicherten Transponder abgefragt wurden, der Programmiertransponder abgefragt wird.

Wird die Anwesenheit eines Programmiertransponders im Sende- und Empfangsbereich der Ausleseeinrichtung detektiert, wird vorgeschlagen, dass die Steuereinrichtung abhängig vom Vergleichsergebnis einer empfangenen Transponderkennung mit der gespeicherten, eindeutigen Transponderkennung des Programmiertransponders in den Programmiermodus wechselt. Das Wechseln in den Programmiermodus kann beispielsweise durch eine optische Anzeige erfolgen.

Nachdem eine Transponderkennung eines Programmiertransponders erkannt wurde, ist es notwendig, die Gültigkeit des Programmiertransponders zu überprüfen. Daher wird gemäß eines vorteilhaften Ausführungsbeispiels vorgeschlagen, dass die Steuereinrichtung die Gültigkeit der Transponderkennung des Programmiertransponders überprüft. Hierzu ist es beispielsweise möglich, dass die Transponderlesevorrichtung die empfangene Programmiertransponderkennung mit einer ersten Verschlüsselungsfunktion verschlüsselt. Das Verschlüsselungsergebnis wird von der Transponderlesevorrichtung an den Programmiertransponder übermittelt. In dem Programmiertransponder ist die Verschlüsselungsroutine der Transponderlesevorrichtung bekannt. Somit ist es möglich zu überprüfen, ob die von der Transponderlesevorrichtung vorgenommene Verschlüsselung der Transponderkennung des Programmiertransponders mit der in dem Programmiertransponder selbst durchgeführten Verschlüsselung der Transponderkennung übereinstimmt. Ist dies der Fall, übermittelt der Programmiertransponder die mit einer weiteren Verschlüsselungsroutine verschlüsselte Transponderkennung des Programmiertransponders an die Transponderlesevorrichtung. In der Transponderlesevorrichtung wird diese erneute Verschlüsselung ebenfalls mit einer intern durchgeführten Verschlüsselung verglichen. Bei einem positiven Vergleichsergebnis wird die Gültigkeit des Programmiertransponders bestätigt.

Zur Programmierung der Transponderlesevorrichtung sind verschiedene Programmiermodi notwendig. Diese Programmiermodi sind beispielsweise das Anlernen eines neuen Transponders, das Löschen eines bereits gespeicherten Transponders und das Löschen aller gespeicherten Transponder. Um den Programmiermodus einstellen zu können, wird vorgeschlagen, dass die Steuereinrichtung im Programmiermodus die Abfrageeinrichtung derart ansteuert, dass die Abfrageeinrichtung die gespeicherte, eindeutige Transponderkennung des Programmiertransponders in Intervallen abfragt und dass die Art des Programmiermodus der Steuereinrichtung in Abhängigkeit von der Anzahl der Rückmeldung des Programmiertransponders wechselt. Hierdurch ist es möglich, dass nachdem ein erstes Mal die Transponderkennung des Programmiertransponders empfangen wurde, in den Programmiermodus gewechselt wird und zunächst überprüft wird, ob bei der nächsten Abfrage einer Transponderkennung erneut die Transponderkennung des Programmiertransponders empfangen wird. Ein interner Zähler zählt die Anzahl der Rückmeldungen des Programmiertransponders. Erreicht die Anzahl der Rückmeldungen einen bestimmten Schwellwert, so wird in den nächsten Programmiermodus gewechselt. So ist es beispielsweise möglich, dass nach einer Sekunde der Programmiertransponder dreimal abgefragt wurde und dreimal seine Transponderkennung an die Transponderlesevorrichtung übermittelt hat. Ist dies der Fall, wechselt der Programmiermodus in den Modus löschen. Wird der Programmiertransponder länger an die Transponderlesevorrichtung gehalten, so übermittelt er weiter nach Abfrage seine eindeutige Transponderkennung. Der interne Zähler zählt weiter hoch und erreicht einen zweiten Schwellwert. Wird dieser erreicht, wird beispielsweise zunächst ein optisches Warnsignal ausgegeben. Verbleibt der Programmiertransponder weiter im Empfangsbereich der Ausleseeinrichtung, wird der interne Zähler weiter hoch gezählt. Daraufhin kann ein dritter Schwellwert erreicht werden. Wird dieser erreicht, kann der Programmiermodus in den Modus Gesamt-Löschen wechseln. Im Modus Gesamt-Löschen werden alle gespeicherten Transpondertypen und Transponderkennungen gelöscht.

Im Modus Löschen fragt die Transponderlesevorrichtung das Vorhandensein von bereits gespeicherten Transponderkennungen ab. Meldet sich einer dieser Transponder, so wird dessen Transponderkennung aus dem Speicher gelöscht. Ist der Transpondertyp der gelöschten Transponderkennung kein weiteres Mal im Speicher abgelegt, so wird auch der Typ gelöscht.

Nachdem eine gespeicherte Transponderkennung von der Ausleseeinrichtung empfangen und in der Steuereinrichtung überprüft wurde, wird ein Freigabesignal erzeugt und an eine Freigabeeinrichtung übermittelt. Um zu verhindern, dass in die Kommunikation zwischen Steuereinrichtung und Freigabeeinrichtung eingegriffen wird, wird vorgeschlagen, dass die Steuereinrichtung das Freigabesignal verschlüsselt an eine Freigabeeinrichtung übermittelt. Diese Übermittlung kann mittels des Challenge-and-Respond Verfahrens erfolgen.

Beim Empfang des Freigabesignal wird gemäß eines vorteilhaften Ausführungsbeispiels durch die Freigabeeinrichtung eine Zugangsberechtigung freigegeben. Diese Zugangsberechtigung kann beispielsweise darin liegen, dass ein potentialfreier Schließkontakt geöffnet oder geschlossen wird.

Gemäß eines vorteilhaften Ausführungsbeispiels wird vorgeschlagen, dass die Transponderlesevorrichtung in einem elektronischen Schließzylinder integriert und eingebaut ist.

Diese und andere Merkmale werden nachfolgend Anhand einer Ausführungsbeispiels zeigenden Zeichnung näher erläutert. In der Zeichnung zeigen:
- Fig. 1: eine schematische Darstellung eines Systems mit Transponderlesevorrichtung;
- Fig. 2: eine Darstellung eines Ablaufdiagramms;

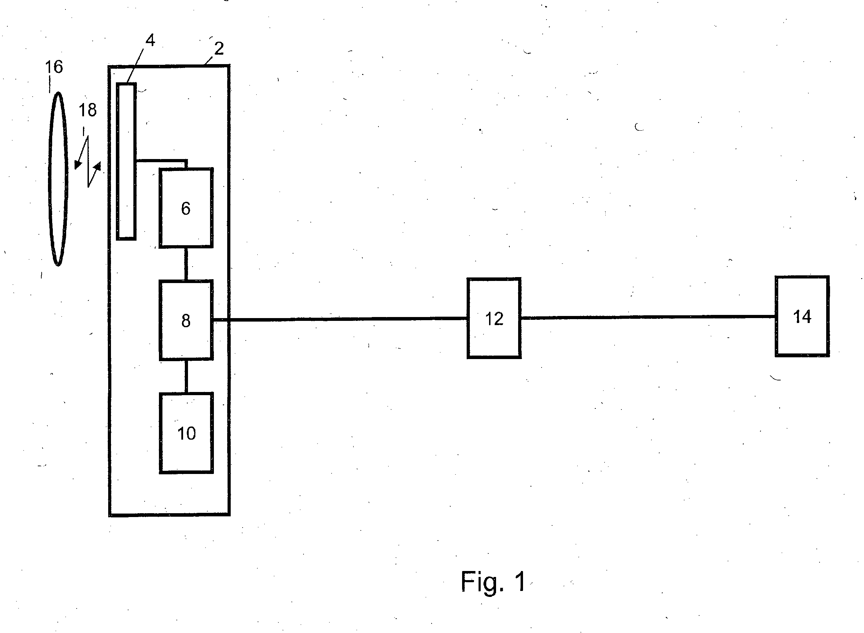

Fig. 1 zeigt eine Transponderlesevorrichtung 2. Die Transponderlesevorrichtung 2 weist eine Antenne 4, eine Ausleseeinrichtung 6, eine Steuereinrichtung 8 und ein Speicher 10 auf. Ferner ist eine Freigabeeinrichtung 12 und ein Schließzylinder 14 dargestellt.

Die Transponderlesevorrichtung 2 kommuniziert mit einem Transponder 16 über ein Hochfrequenzfeld mit elektromagnetischen Wellen 18.

Die Transponderlesevorrichtung 2 strahlt ein Hochfrequenzfeld über die Antenne 4 aus und empfängt Hochfrequenzsignale des Transponders 16 über die Antenne 4. Die ausgesendeten und empfangenen Signale werden in der Ausleseeinrichtung 6 verarbeitet. Die Steuereinrichtung 8 steuert die Ausleseeinrichtung 6 derart, dass die richtigen Signale ausgesandt werden und die empfangenen Signale ausgewertet werden. Die Steuereinrichtung speichert im Speicher 10 empfangene Transponderkennungen zusammen mit den entsprechenden Transpondertypen. Die Transponderlesevorrichtung 2 arbeitet wie folgt:

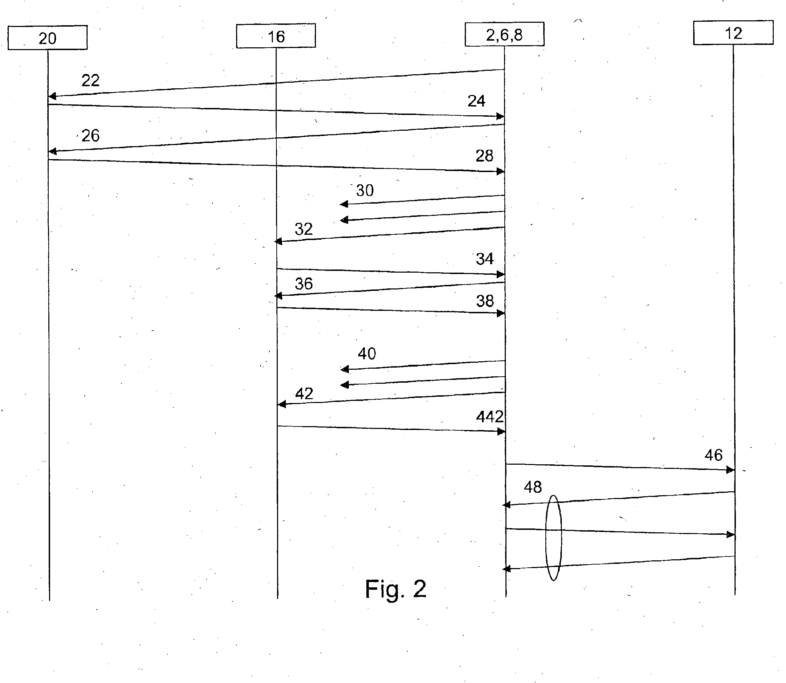

In Fig. 2 ist ein Ablaufdiagramm dargestellt, welches die Kommunikation zwischen der Transponderlesevorrichtung 2, Respektive der Ausleseeinrichtung 6 und der Steuereinrichtung 8, dem Transponder 16, einem Programmiertransponder 20 und einer Freigabeeinrichtung 12 zeigt. Zunächst wird von der Abfrageeinrichtung 6 eine Transponderkennung eines Programmiertransponders 20 abgefragt (22). Diese Abfrage wird in Intervallen durchgeführt, solange bis sich ein Programmiertransponder 20 mit seiner eindeutigen Kennung bei der Ausleseeinrichtung 6 meldet (24). Beim Empfang der eindeutigen Transponderkennung des Programmiertransponders 20 wird von der Ausleseeinrichtung 6 eine Verschlüsselung der Kennung des Programmiertransponders 20 mit einem Verschlüsselungsalgorithmus f durchgeführt. Die verschlüsselte Kennung wird an den Programmiertransponder 20 übermittelt (26).

In dem Programmiertransponder 20 ist derselbe Verschlüsselungsalgorithmus bekannt, wie er in der Ausleseeinrichtung 6 durchgeführt wurde. In dem Programmiertransponder 20 ist die verschlüsselte Kennung abgespeichert und wird nach Erhalt der verschlüsselten Kennung mit dieser verglichen. Ist das Vergleichsergebnis positiv, verschlüsselt der Programmiertransponder 20 seine Kennung erneut mit einem zweiten Verschlüsselungsalgorithmus f' und übermittelt diesen (28) an die Abfrageeinrichtung 6.

In der Abfrageeinrichtung 6 wird eine zu der im Programmiertransponder 20 symmetrische Verschlüsselung durchgeführt und überprüft, ob die empfangene, verschlüsselte Transponderkennung korrekt ist.

Die Abfrage der Transponderkennung 22 als auch die Gültigkeit 26 wird solange durchgeführt, wie der Programmiertransponder 20 im Sende-, Empfangsbereich der Ausleseeinrichtung 6 ist. Je länger der Programmiertransponder 20 im Sense- und Empfangsbereich der Ausleseeinrichtung 6 ist, desto häufiger werden die Mitteilungen 22-28 zwischen Programmiertransponder 20 und Ausleseeinrichtung 6 ausgetauscht und ein interner Zähler in der Speichereinrichtung 8 zählt die Anzahl der Rückmeldungen. Diese Anzahl ist entscheidend dafür, in welchem Programmiermodus die Transponderlesevorrichtung 2 wechselt.

In der dargestellten Figur 2 wechselt die Transponderlesevorrichtung 2 zunächst in den Anlernmodus. In diesem Anlernmodus werden Aktivierungskommandos für verschiedenartige Transponder ausgesendet (30). Die Art und Anzahl der Aktivierungskommandos lässt sich in die Transponderlesevorrichtung 2 einspeichern. Sobald ein Transponder 16 auf ein Aktivierungskommando 30 anspricht (32), Übermittelt dieser seinen Transpondertyp (34) an die Ausleseeinrichtung 6. Abhängig vom empfangenen Transpondertyp wird von der Ausleseeinrichtung 6 eine eindeutige Transponderkennung vom Transponder 16 abgefragt (36). Da die Abfrage der Transponderkennung (36) an den Typ des Transponders 16 angepasst ist, kann der Transponder 16 seine Kennung zusammen mit seinem Typ an die Ausleseeinrichtung 6 übermitteln (38). Hiernach wird durch die Steuereinrichtung 8 der Transpondertyp zusammen mit der Transponderkennung in dem Speicher 10 gespeichert.

Zum Anlernen eines weiteren Transponders müssen die Schritte 22-28 erneut durchgeführt werden.

Zum Löschen einer Transponderkennung aus dem Speicher 10 werden die Schritte 22-28 entsprechend häufig durchgeführt, bis der interne Zähler in der Steuereinrichtung 8 einen ersten Schwellwert erreicht. Daraufhin werden die Schritte 30-38 durchlaufen. Beim Empfangen des Tuppels Transpondertyps und Transponderkennung wird jedoch nicht, wie zuvor beschrieben, dieser in dem Speicher 10 abgelegt, sondern aus dem Speicher gelöscht. Ist in dem Speicher 10 kein entsprechendes Tuppel abgelegt, so wechselt die Transponderlesevorrichtung 2 wieder in den Betriebsmodus.

Nachdem zumindest ein Transponder an die Transponderlesevorrichtung 2 angelernt wurde, wird in den Schritten 40 ein Abfragesignal ausgesendet, welches eine Abfrage einer Transponderkennung ermöglicht. Dieses Abfragesignal 40 wird in einem Protokoll ausgesendet, welche zu dem Transpondertyp passen, welche in dem Speicher 10 gespeichert sind. Reagiert ein Transponder 16 auf eine solche Abfrage 40 (42), übermittelt dieser seine Transponderkennung an die Ausleseeinrichtung 6 (44). Bei einem positiven Vergleichsergebnis der empfangenen Transponderkennung mit einer in dem Speicher 10 abgelegten Transponderkennung, wird ein Freigabesignal an eine Freigabeeinrichtung 12 übermittelt (46). Zur Kontrolle, ob das Abfragesignal tatsächlich von einer berechtigten Transponderlesevorrichtung 2 stammt, wird im Challenge-and-Response Verfahren (48) die Gültigkeit des Freigabesignals überprüft. Bei einem positiven Ergebnis schaltet die Freigabeeinrichtung 2 eine Zugangsberechtigung frei.

Durch die beschriebene Transponderlesevorrichtung ist es möglich, verschiedenartige Transponder, welche verschiedene Protokolle unterstützen, anzulernen und für die Freigabe einer Zugangsberechtigung zu nutzen. Bevorzugt werden Autoschlüssel verwendet, welche abhängig vom jeweiligen Fahrzeughersteller unterschiedliche Protokolle unterstützen.

## Patentansprüche

1. Transponderlesevorrichtung (2) mit
einer Steuereinrichtung (8) zum Steuern einer elektromagnetische Wellen (18) aussendenden und empfangenden Ausleseeinrichtung (6),
**dadurch gekennzeichnet,**
**dass** ein Programmiermodus in Form eines Anlernmodus zumindest zum Anlernen eines Transponders (16) an die Transponderlesevorrichtung (2) vorgesehen ist, wobei in dem Programmiermodus die Steuereinrichtung (8) die Ausleseeinrichtung (6) derart ansteuert, dass die Ausleseeinrichtung (6) zumindest zwei verschiedenartige, Transponder (16) aktivierende Aktivierungskommandos über die elektromagnetischen Wellen (18) aussendet, und dass in dem Programmiermodus die Steuereinrichtung (8) einen von der Ausleseeinrichtung (6) sensierten Transpondertyp zusammen mit der abgefragten Transponderkennung speichert.

2. Transponderlesevorrichtung (2) nach Anspruch 1, **dadurch gekennzeichnet, dass** in dem Programmiermodus die Steuereinrichtung (8) die Ausleseeinrichtung (6) derart ansteuert, dass die Ausleseeinrichtung (6) in Intervallen die zumindest zwei verschiedenartigen Aktivierungskommandos aussendet.

3. Transponderlesevorrichtung (2) nach einem der vorangehenden Ansprüche, **dadurch gekennzeichnet, dass** in dem Programmiermodus die Steuereinrichtung (8) die Ausleseeinrichtung (6) derart ansteuert, dass die Ausleseeinrichtung (6) nach dem Aussenden der Aktivierungskommandos eine einen Transpondertyp kennzeichnende Rückmeldung eines Transponders (16) sensiert.

4. Transponderlesevorrichtung (2) nach einem der vorangehenden Ansprüche, **dadurch gekennzeichnet, dass** in dem Programmiermodus die Steuereinrichtung (8) die Ausleseeinrichtung (6) derart ansteuert, dass die Ausleseeinrichtung (6) nach dem Sensieren einer den Transpondertyp kennzeichnenden Rückmeldung abhängig vom sensierten Transpondertyp eine eindeutige Transponderkennung vom Transponder (16) abfragt.

5. Transponderlesevorrichtung (2) nach einem der vorangehenden Ansprüche, **dadurch gekennzeichnet, dass** die Steuereinrichtung (8) nach ihrer Programmierung die Ausleseeinrichtung (6) derart ansteuert, dass die Ausleseeinrichtung (6) in Intervallen abhängig von zumindest einem gespeicherten Transpondertyp eindeutige Transponderkennungen von Transpondern (16) abfragt.

6. Transponderlesevorrichtung (2) nach einem der vorangehenden Ansprüche, **dadurch gekennzeichnet, dass** die Steuereinrichtung (8) die abgefragten Transponderkennungen mit den gespeicherten Transponderkennungen vergleicht und abhängig vom Vergleichsergebnis ein Freigabesignal erzeugt.

7. Transponderlesevorrichtung (2) nach einem der vorangehenden Ansprüche, **dadurch gekennzeichnet, dass** die Steuereinrichtung (8) nach ihrer Programmierung die Ausleseeinrichtung (6) derart ansteuert, dass die Ausleseeinrichtung in Intervallen eine gespeicherte, eindeutige Transponderkennung eines Programmiertransponders (20) abfragt.

8. Transponderlesevorrichtung (2) nach einem der vorangehenden Ansprüche, **dadurch gekennzeichnet, dass** die Steuereinrichtung (8) abhängig vom Vergleichsergebnis einer empfangenen Transponderkennung mit der gespeicherten, eindeutigen Transponderkennung des Programmiertransponders (20) in den Programmiermodus wechselt.

9. Transponderlesevorrichtung (2) nach einem der vorangehenden Ansprüche, **dadurch gekennzeichnet, dass** die Steuereinrichtung (8) die Gültigkeit der Transponderkennung des Programmiertransponders (20) überprüft.

10. Transponderlesevorrichtung (2) nach einem der vorangehenden Ansprüche, **dadurch gekennzeichnet, dass** die Steuereinrichtung (8) im Programmiermodus die Ausleseeinrichtung (6) derart ansteuert, dass die Ausleseeinrichtung (6) die gespeicherte, eindeutige Transponderkennung des Programmiertransponders (20) in Intervallen abfragt und dass die Art des Programmiermodus der Steuereinrichtung (8) in Abhängigkeit von der Anzahl der Rückmeldungen des Programmiertransponders (20) wechselt.

11. Transponderlesevorrichtung (2) nach einem der vorangehenden Ansprüche, **dadurch gekennzeichnet, dass** die Steuereinrichtung (8) das Freigabesignal verschlüsselt an eine Freigabeeinrichtung (12) übermittelt.

12. Transponderlesevorrichtung (2) nach einem der vorangehenden Ansprüche, **dadurch gekennzeichnet, dass** die Steuereinrichtung (8) mit der Freigabeeinrichtung (12) über eine Challenge-and-Response Verschlüsselung kommuniziert.

13. Transponderlesevorrichtung (2) nach einem der vorangehenden Ansprüche, **dadurch gekennzeichnet, dass** die Freigabeeinrichtung (12) beim Empfang des Freigabesignals eine Zugangsberechtigung freigibt.

14. Transponderlesevorrichtung (2) nach einem der vorangehenden Ansprüche, **dadurch gekennzeichnet, dass** sie in einen elektronischen Schließzylinder eingebaut ist.

## Claims

1. Transponder reading device (2) with a control unit (8) for controlling a read-out unit (6) sending and receiving electromagnetic waves (18), **characterised in that** a programming mode in the form of a learning mode is provided at least for learning a transponder (16) to the transponder reading device (2) wherein, in the programming mode, the control unit (8) controls the read-out unit (6) such that the read-out unit (6) sends at least two activation commands activating different types of transponders (16) via electromagnetic waves (18), and that in the programming mode, the control unit (8) stores a transponder type sensed by the read-out unit (6) together with the retrieved transponder identification.

2. Transponder reading device (2) according to claim 1, **characterised in that**, in the programming mode, the control unit (8) controls the read-out unit (6) such that the read-out unit (6) sends the at least two different types of activation commands at intervals.

3. Transponder reading device (2) according to either of the preceding claims, **characterised in that**, in the programming mode, the control unit (8) controls the read-out unit (6) such that the read-out unit (6) senses a response from a transponder (16) identifying a transponder type after the activation command has been sent.

4. Transponder reading device (2) according to any one of the preceding claims, **characterised in that**, in the programming mode, the control unit (8) controls the read-out unit (6) such that the read-out unit (6) queries a unique transponder identification from the transponder (16) after sensing a transponder type depending on the transponder type sensed.

5. Transponder reading device (2) according to any one of the preceding claims, **characterised in that** the control unit (8) controls the read-out unit (6), following the programming thereof such that the read-out unit (6) queries unique transponder identifications from transponders (16) at intervals depending on at least one saved transponder type.

6. Transponder reading device (2) according to any one of the preceding claims, **characterised in that** the control unit (8) compares the queries transponder identifications with the saved transponder identifications and generates a release signal depending on the comparative result.

7. Transponder reading device (2) according to any one of the preceding claims, characterised that the control unit (8) controls the read-out unit (6), following the programming thereof, such that the read-out unit queries a saved unique transponder identification of a programming transponder (20) at intervals.

8. Transponder reading device (2) according to any one of the preceding claims, characterised i that the control unit (8) switches to programming mode depending on the result of comparison between a received transponder identification and a saved unique transponder identification of the programming transponder (20).

9. Transponder reading device (2) according to any one of the preceding claim, **characterised in that** the control unit (8) checks the validity of the transponder identification of the programming transponder (20).

10. Transponder reading device (2) according to any one of the preceding claims, **characterised in that**, in the programming mode, the control unit (8) controls the read-out unit (6) such that the read-out unit (6) queries the saved unique transponder identification of the programming transponder (20) at intervals and that the programming mode type of the control unit (8) switches according to the number of the responses from the programming transponder (20).

11. Transponder reading device (2) according to any one of the preceding claims, **characterised in that** the control unit (8) sends the release signal to the release unit (12) in an encrypted manner.

12. Transponder reading device (2) according to any one of the preceding claims, **characterised in that** the control device (8) communicates with the release unit (12) by means of challenge and response encryption.

13. Transponder reading device (2) according to any one of the preceding claims, **characterised in that** the release unit (12) releases access authorisation upon receipt of the release signal.

14. Transponder reading device (2) according to any one of the preceding claims, **characterised in that** it is built in an electronic lock cylinder.

## Revendications

1. Dispositif de lecture de transpondeurs (2) muni d'un dispositif de commande (8) destiné à commander un dispositif de lecture (6) transmettant et recevant des ondes électromagnétiques (18), **caractérisé en ce que** l'on prévoit un mode de programmation, sous forme d'un mode de formation, au moins pour former un transpondeur (16) sur le dispositif de lecture de transpondeurs (2), où le dispositif de commande (8) commande, en mode de programmation, le dispositif de lecture (6) de telle sorte que le dispositif de lecture (6) émet au moins deux commandes d'activation différentes activant les transpondeurs (16) à l'aide des ondes électromagnétiques (18), et que le dispositif de commande (8) sauvegarde, en mode de programmation, un type de transpondeur avec l'identifiant de transponder choisi, ce type de transpondeur étant détecté par le dispositif de lecture (6).

2. Dispositif de lecture de transpondeurs (2) selon la revendication 1, **caractérisé en ce que** le dispositif de commande (8) commande, en mode de programmation, le dispositif de lecture (6) de telle sorte que le dispositif de lecture (6) émet, par intervalles de temps, les au moins deux commandes d'activation différentes.

3. Dispositif de lecture de transpondeurs (2) selon une des revendications précédentes, **caractérisé en ce que** le dispositif de commande (8) commande, en mode de programmation, le dispositif de lecture (6) de telle sorte que le dispositif de lecture (6) détecte, après l'émission de la commande d'activation, un retour d'information d'un transpondeur (16) caractérisant le type de transpondeur.

4. Dispositif de lecture de transpondeurs (2) selon une des revendications précédentes, **caractérisé en ce que** le dispositif de commande (8) commande, en mode de programmation, le dispositif de lecture (6) de telle sorte que le dispositif de lecture (6) interroge, après la détection d'un retour d'information caractérisant le type de transpondeur, en fonction du type de transpondeur détecté, l'identifiant de transpondeur unique à partir du transpondeur (16).

5. Dispositif de lecture de transpondeurs (2) selon une des revendications précédentes, **caractérisé en ce que** le dispositif de commande (8) commande, après sa programmation, le dispositif de lecture (6) de telle sorte que le dispositif de lecture (6) interroge, par intervalles de temps, en fonction d'au moins un type de transpondeur sauvegardé, l'identifiant de transpondeur unique à partir du transpondeur (16).

6. Dispositif de lecture de transpondeurs (2) selon une des revendications précédentes, **caractérisé en ce que** le dispositif de commande (8) compare les identifiants de transpondeur interrogés avec les identifiants de transpondeur sauvegardés et produit, en fonction du résultat de comparaison, un signal de libération.

7. Dispositif de lecture de transpondeurs (2) selon une des revendications précédentes, **caractérisé en ce que** le dispositif de commande (8) commande, après sa programmation, le dispositif de lecture (6) de telle sorte que le dispositif de lecture (6) interroge, par intervalles de temps, un identifiant de transpondeur unique sauvegardé d'un transpondeur de programmation (20).

8. Dispositif de lecture de transpondeurs (2) selon une des revendications précédentes, **caractérisé en ce que** le dispositif de commande (8) échange, en fonction du résultat de comparaison, en mode de programmation, un identifiant de transpondeur reçu avec l'identifiant de transpondeur unique sauvegardé du transpondeur de programmation (20).

9. Dispositif de lecture de transpondeurs (2) selon une des revendications précédentes, **caractérisé en ce que** le dispositif de commande (8) vérifie la validité de l'identifiant de transpondeur du transpondeur de programmation (20).

10. Dispositif de lecture de transpondeurs (2) selon une des revendications précédentes, **caractérisé en ce que** le dispositif de commande (8) commande, en mode de programmation, le dispositif de lecture (6) de telle sorte que le dispositif de lecture (6) interroge, par intervalles de temps, l'identifiant de transpondeur unique sauvegardé du transpondeur de programmation (20) et que le type du mode de programmation du dispositif de commande (8) change en fonction du nombre de retour d'information du transpondeur de programmation (20).

11. Dispositif de lecture de transpondeurs (2) selon une des revendications précédentes, **caractérisé en ce que** le dispositif de commande (8) transmet le signal de libération chiffré au dispositif de libération (12).

12. Dispositif de lecture de transpondeurs (2) selon une des revendications précédentes, **caractérisé en ce que** le dispositif de commande (8) communique avec le dispositif de libération (12) à l'aide d'un chiffrage défi-réponse.

13. Dispositif de lecture de transpondeurs (2) selon une des revendications précédentes, **caractérisé en ce que** le dispositif de libération (12) débloque une autorisation d'accès lors de la réception du signal de libération (12).

14. Dispositif de lecture de transpondeurs (2) selon une des revendications précédentes, **caractérisé en ce qu'**il est incorporé dans un cylindre de fermeture électronique.
